# EUROPÄISCHE PATENTSCHRIFT

(11) **EP 4 169 151 B1**
(45) Veröffentlichungstag und Bekanntmachung des Hinweises auf die Patenterteilung: **05.08.2026**
(21) Anmeldenummer: 21735866.2
(22) Anmeldetag: 17.06.2021
(51) Int. Cl.: H02K 11/33, H02K 11/215, H02K 7/116, H02K 5/10, H02K 7/00, H02K 7/08

(54) **AUFBAUKONZEPT EINES ANTRIEBS FÜR EINE AKTUIERUNG IM ANTRIEBSSTRANG**
DESIGN CONCEPT OF A DRIVE FOR ACTUATION IN THE DRIVE TRAIN
CONCEPT STRUCTURAL D'UN ENTRAÎNEMENT POUR UN ACTIONNEMENT DANS LA CHAÎNE CINÉMATIQUE

(30) Priorität: 19.06.2020 DE 102020207640
(43) Veröffentlichungstag der Anmeldung: 26.04.2023
(73) Patentinhaber: Schaeffler Technologies AG & Co. KG, 91074 Herzogenaurach (DE)
(72) Erfinder: SCHALJA, Alexander, 81737 München (DE)
(74) Vertreter: Schaeffler Technologies
(86) Internationale Anmeldenummer: PCT/EP2021/066330
(87) Internationale Veröffentlichungsnummer: WO 2021/255134

(56) Entgegenhaltungen:
- US-A1- 2017 373 555
- US-A1- 2018 062 479
- US-A1- 2019 097 495
- US-A1- 2019 326 842

## Beschreibung

Die Erfindung betrifft ein Aufbaukonzept eines Antriebs für eine Aktuierung im Antriebsstrang eines Kraftfahrzeugs nach dem Oberbegriff von Anspruch 1.

Die auf freien Markt bekannten, nicht smarten Lösungen für ein Aufbaukonzept eines Antriebs für eine Aktuierung im Antriebsstrang verfügen in der Regel über folgende Komponenten:
- Elektromotor (DC, BLDC, SR = switched reluctance) für ein Drehmoment im Bereich von ca. 0.2 bis 0.7 Nm,
- Ein Untersetzungsgetriebe (Schnecken- oder ExzenterGetriebe),
- Einen Rotorlagesensor (bei BLDC bzw. SR Motortypen), typischerweise als Switched-Hall-Sensor-Array ausgeführt.

Aus der US 2017/373555 A1, sowie der US 2018/062479 A1 sind Aufbaukonzepte für Antriebe bekannt, welche einen Elektromotor, ein Untersetzungsgetriebe, sowie einen Rotorlagensensor umfassen.

"Smarte Antriebe", meist auf DC-Motor-Basis, verfügen typischerweise über einen integrierten Sensor zur Winkelerfassung der Abtriebswelle, meist als Linear-Hall-Sensor mit magnetischem Target ausgeführt, jedoch keinen Rotorlagesensor, da insbesondere ein DC-Motor prinzipiell keinen Rotorlagesensor zum Betreiben benötigt.

Folgende Anforderungen werden an derartige Antriebe gestellt:
- Abtriebsdrehmoment im Bereich bis 25 Nm,
- Abtriebswinkelbereich von ca. 20 bis 120 °,
- Selbsthemmung bzw. keine Selbsthemmung, je nach Aus führung der zu bewegenden Mechanik-Strecke,
- Sicherheitsrelevante Verfügbarkeit von Lage-Information der Abtriebswelle,
- Erfüllung einer Positionierungsgenauigkeit bezogen auf die Winkellage der Abtriebswelle.

"Nicht smarte" Antriebe müssen extern betrieben bzw. geregelt werden. Dazu wird ein zusätzliches Steuergerät, insbesondere ein Standalone-Steuergerät benötigt. Ferner wird eine elektrische Verbindung, zum Beispiel ein Kabelbaum für die Drei-Phasen-Stromversorgung des Motors benötigt.

Der Rotorlagesensor muss versorgt und ausgelesen werden. Dazu sind weitere vier bis fünf Leiter im selben Kabelbaum nötig. Die Winkelerfassung der Abtriebswelle bedarf bei "nicht smarten" Antrieben einer zusätzlichen Komponente, insbesondere eines Sensors bzw. eines Schalters, sowie eines weiteren zusätzlichen Kabelbaums und eines Steckers zur Versorgung des Sensors zur Winkelerfassung der Abtriebswelle und zur Signalübertragung vom Sensor.

DC-Motor-basierte Lösungen sind günstig, aber selbsthemmend und sind zudem begrenzt in der Erfüllung von Sicherheitsanforderungen, insbesondere ASIL C, bedingt durch den DC-Motor an sich (potentieller Kurzschluss gegen Masse und somit ungewolltes Bewegen des Aktors) und es wird nur ein Winkelsensor benötigt, anstelle von zwei.

BLDC- bzw. SR-Motor-basierte Lösungen bringen Nachteile bezüglich der Integration und Anordnung von Rotorlage- und Abtriebswellen-Winkel-Sensoren mit sich, da die beiden Sensoren typischerweise auf gegenüberliegenden Seiten der Anordnung angebracht werden. Dies ist unter anderem bedingt durch die Getriebebauweise, welche ein rotationsachsen-nahes Sensieren verhindert, was eine Integration von einem "Sensor-Dom" außerhalb der Leiterplatten-Ebene der Steuereinheit erfordert und einen Kostennachteil mit sich bringt.

Im Falle von "smarten" BLDC- bzw. SR-Motor basierten Anordnungen führt ein typisches Aktor-Design bei einer klassischen Anordnung der Komponenten ECU (Electronic Control Unit) - Motor Getriebe-Stufen zu einer Art Pilzkopf an einer Stirnseite des Staors, typischerweise bedingt durch einen größeren benötigten radialen Bauraum für den Schaltungsträger im Vergleich zu dem Durchmesser des Stators, und führt damit zu Nachteilen insbesondere in Bezug auf den radialen Bauraum. Das heißt, klassisch wird der als Leiterplatte ausgeführte Schaltungsträger ( = PCB) der ECU axial an die Stirnseite des Motors angeordnet, und die Projektion der Fläche der PCB ist typischerweise größer als der Motor-durchmesser.

Dies beeinträchtigt insbesondere die Nachbarkomponenten im gegebenen Bauraum des Kunden, beispielsweise in der Umgebung von Getriebe oder Traktionsmaschine, bzw. beeinträchtigt die gegebenen Verläufe der darüber hinaus benötigten Schläuche, Rohre, Kabelbäume, Abgasanlage etc. und führt somit gegebenenfalls zu einem erhöhtem Änderungsaufwand bei einer Integration für den Kunden.

Bei der üblichen Anordnung von PCB und E-Motor liegt folgende Verwendung eines Rotorlage-Sensorsystems (RPS) vor:
- Sensormagnet mit einer Höhe von ca. 5 mm - Luftspalt zum Sensor-IC in der Größenordnung von ca. 2-3 mm - Sensor-IC mit einer Höhe von ca. 2.5 mm. Diese Anordnung wirkt sich somit sehr nachteilig auf die axiale Bauhöhe des Aktorkonzepts aus.

Typischerweise wird bei BLDC- bzw. SR-Motor basierten Aktoren die Rotorwelle beidseitig mit Kugellagern gelagert (A- und B-Seite).Der Abtrieb bzw. die Anbindung eines Ritzels oder Zahnrads erfolgt an der Wellenspitze (C-Seite), an der von der PCB abgewandten Seite. Dies trägt ebenfalls negativ zur Gesamtbaulänge des Konzepts bei.

Außerdem führt dieser klassische Ansatz des Aktorkonzepts zur Notwendigkeit eines Deckels zur Abdeckung der Leiterplatte als weitere Gehäuse-Komponente sowie insbesondere einer zusätzlichen, separaten Umwelt-Dichtung im Deckel der Anordnung. Das herkömmliche Aufbaukonzept aus ECU - Motor - Getriebe benötigt somit einen relativ großen Bauraum, insbesondere in axialer Ausdehnung, und eine relativ große Anzahl an Einzelteilen, die wiederum durch zusätzliche separate Dichtungen gegeneinander abgedichtet werden müssen.

Es ist daher die Aufgabe der vorliegenden Erfindung, ein Aufbaukonzept eines intelligenten Antriebs für eine Aktuierung im Antriebsstrang eines Kraftfahrzeugs zu schaffen, die gegenüber dem Stand der Technik in Bezug auf den benötigten Bauraum, die Anzahl der Komponenten und in Bezug auf die Herstellungskosten eine Verbesserung darstellt.

Diese Aufgabe wird erfindungsgemäß gelöst durch ein Aufbaukonzept mit den Merkmalen des Anspruchs 1.

Ein erfindungsgemäßes Aufbaukonzept umfasst, einen Elektromotor mit einer Motorgehäuseschale, einen Schaltungsträger mit einer Steuereinheit zur Steuerung des Elektromotors, eine Abtriebswelle eines Getriebes mit einer Getriebegehäuseschale, wobei die Rotorwelle des Elektromotors axial zur Abtriebswelle des Getriebes angeordnet ist, und die Rotorwelle des Elektromotors im Bereich der Getriebegehäuseschale in der Abtriebswelle drehbar gelagert aufgenommen ist, wobei der Schaltungsträger zwischen dem Elektromotor und der Abtriebswelle des Getriebes angeordnet ist, und wobei die Rotorwelle durch eine Ausnehmung in dem Schaltungsträger führt.

Dadurch, dass der Schaltungsträger zwischen dem Elektromotor und der Abtriebswelle des Getriebes angeordnet ist, ergeben sich Vorteile insbesondere in Bezug auf den benötigten Bauraum und weiterhin in Bezug auf die Material- und die Herstellungskosten des Aufbaukonzepts.

Erfindungsgemäß ist der Schaltungsträger beidseitig mit elektronischen Komponenten bestückt, wobei ein erster Sensor zur Erfassung der Rotorlage auf der zum Elektromotor hin gewandten Seite des Schaltungsträgers außerhalb der Ausnehmung und ein zweiter Sensor zur Winkelerfassung der Abtriebswelle auf der zur Abtriebswelle hin gewandten Seite des Schaltungsträgers außerhalb der Ausnehmung angeordnet ist. Dadurch ergibt sich eine geringere Ausdehnung des Aufbaukonzepts in axialer Richtung.

In einer Ausführungsform ist der erste Sensor als magnetoresistiver Sensor oder als Switched-Hall-Sensor-Array ausgeführt.

In einer weiteren Ausführungsform ist der zweite Sensor als linearer Hall-Sensor, als Single-Switched-Hall-Sensor oder als Switched-Hall-Sensor-Array ausgeführt.

In einer Ausführungsform ist ferner zwischen der Motorgehäuseschale und der Getriebegehäuseschale eine Dichtung angeordnet, wobei die Dichtung als Flüssigdichtung oder als Feststoffdichtung ausgeführt ist Alternativ kann die Dichtung an eine der beiden Gehäuseschalen angespritzt ist.

Insbesondere entspricht in einer Ausführungsform die radiale Ausdehnung der Motorgehäuseschale im wesentlichen der radialen Ausdehnung des Elektromotors. Dies trägt zur Kompaktheit der Anordnung bei.

In einer weiteren Ausführungsform entspricht die gesamte axiale Ausdehnung des Aufbaukonzeptes im wesentlichen der Summe der axialen Ausdehnung der Motorgehäuseschale und der axialen Ausdehnung der Getriebegehäuseschale. Auch dies trägt zur Kompaktheit der Anordnung bei.

In einer Ausführungsform ist die Aktuierung als Parksperre, als Automatikgetriebe-Wahlschalter, als Gangsteller oder als Kupplungsaktuator in einem Kraftfahrzeug ausgestaltet.

In einer Ausführungsform ist ferner die Rotorwelle in der Abtriebswelle drehbar gelagert, wobei das Lager in der Abtriebswelle als Gleitlager oder Wälzkörperlager ausgeführt sein kann.

In der nachfolgenden Beschreibung werden die Merkmale und Einzelheiten der Erfindung in Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar. In den Zeichnungen zeigen:
Fig. 1 eine schematische Darstellung eines Aufbaukonzepts aus dem Stand der Technik,
Fig. 2 eine schematische Darstellung eines erfindungsgemäßen Aufbaukonzepts,
Fig. 3 einen Schnitt durch ein Aufbaukonzept aus dem Stand der Technik,
Fig. 4 einen Schnitt durch ein erfindungsgemäßes Aufbaukonzept
Fig. 5 eine Explosionsdarstellung des Aufbaukonzepts.

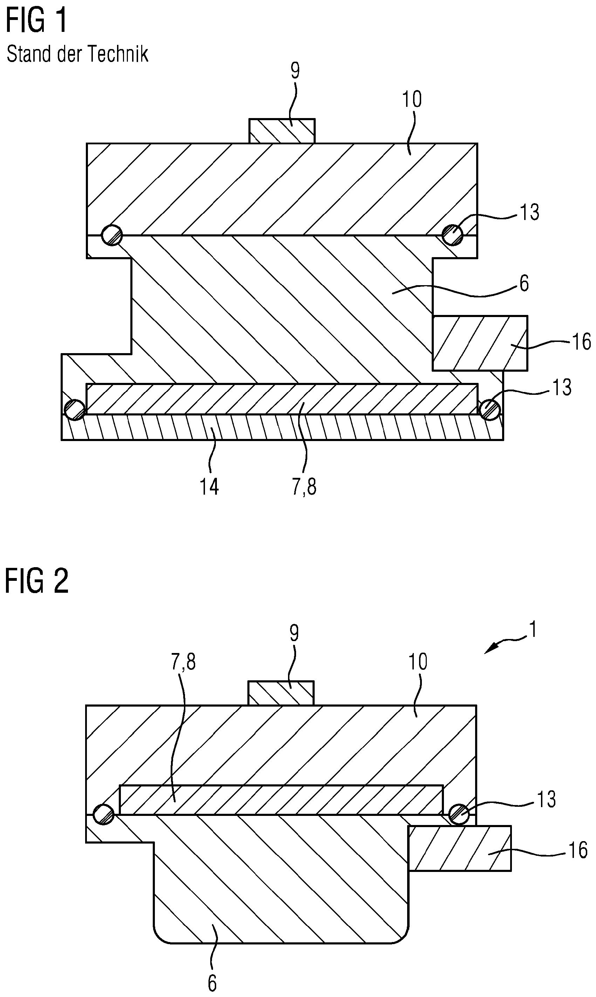

Fig. 1 zeigt eine schematische Darstellung eines Aufbaukonzepts aus dem Stand der Technik. Eine Motorgehäuseschale 6, die den Elektromotor 2 aufnimmt, und eine Getriebegehäuseschale 10 , die im wesentlichen die Abtriebswelle 9 aufnimmt, bilden die wesentlichen Komponenten des Gehäuses des Aufbaukonzepts. Zwischen der Motorgehäuseschale 6 und der Getriebegehäuseschale 10 ist eine Dichtung 13 angeordnet. Ein Schaltungsträger 7 , insbesondere als Leiterplatte oder PCB ausgebildet, auf dem eine Steuereinheit 8, auch als ECU bezeichnet, zur Steuerung des Elektromotors 2 angeordnet ist, ist an der der Abtriebswelle 9 abgewandten Seite der Motorgehäuseschale 6 stirnseitig angeordnet, und gegen den Raum außerhalb des Gehäuses mit einer weiteren Dichtung 13 zwischen der Motorgehäuseschale 6 und einem Deckel 14 abgedichtet.

Dadurch, dass die Projektion der Fläche der Leiterplatte in der Regel größer ist als Durchmesser des Elektromotors 2, hat dieses Aufbaukonzept 1 aus dem Stand der Technik insbesondere den Nachteil in Bezug auf den Bauraum in radialer Richtung, da hier die radiale Ausdehnung der Motorgehäuseschale 6 zwangsläufig größer ist als die radiale Ausdehnung des Elektromotors 2. Dadurch nimmt die Motorgehäuseschale 6 die Form eines Pilzkopfs an.

Fig. 2 zeigt eine schematische Darstellung des erfindungsgemäßen Aufbaukonzepts. Der Schaltungsträger 7 mit einer Steuereinheit 8 zur Steuerung des Elektromotors 2 ist hier zwischen dem Elektromotor 2 in der Motorgehäuseschale 6 und der Abtriebswelle 9 des Getriebes in Getriebegehäuseschale 10 angeordnet. Der Bauraum der Motorgehäuseschale 6 in radialer Richtung ist somit kleiner als im Stand der Technik, da jetzt die radiale Ausdehnung der Motorgehäuseschale 6 im wesentlichen der radialen Ausdehnung des Elektromotors 2 entspricht. Ein weiterer Vorteil bei diesem Aufbaukonzept 1 ist, dass hier nur eine einzige Dichtung 13, und zwar zwischen Motorgehäuseschale 6 und Getriebegehäuseschale 10 , nötig ist, da die Motorgehäuseschale 6 keinen Deckel 14 benötigt.

In Fig. 1 und in Fig. 2 ragt beispielsweise die Abtriebswelle 9 aus der Getriebegehäuseschale 10 heraus.

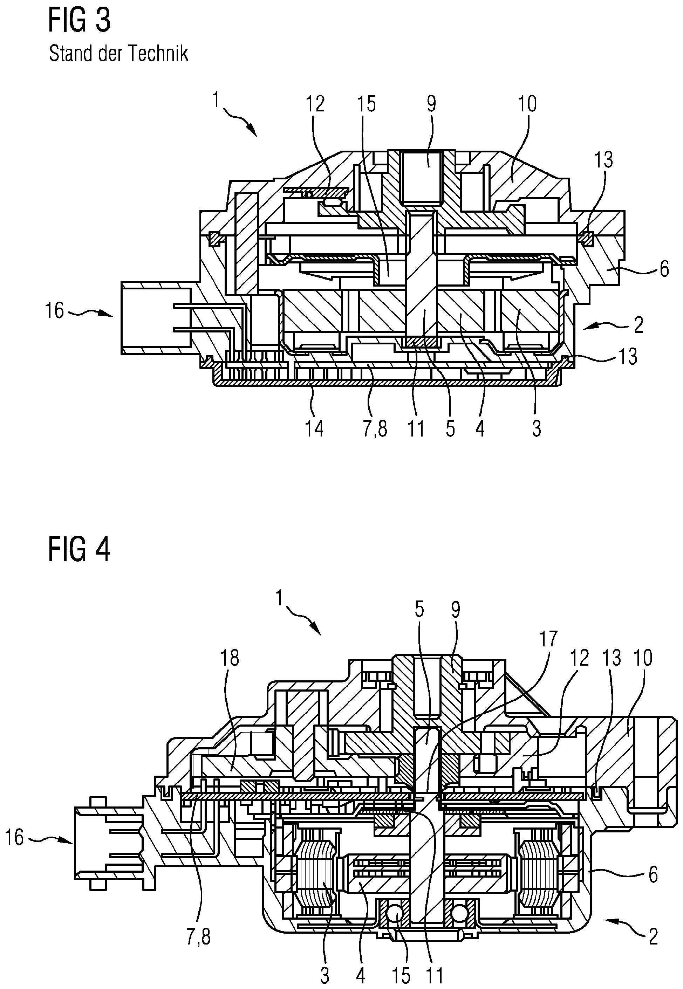

Fig. 3 zeigt einen Schnitt durch ein Aufbaukonzept 1 aus dem Stand der Technik. Einen Elektromotor 2 ist in einer Motorgehäuseschale 6 angeordnet. Der Elektromotor 2 umfasst einen Stator 3 und einen Rotor 4 mit einer Rotorwelle 5. Eine Abtriebswelle 9 eines Getriebes ist in einer Getriebegehäuseschale 10 angeordnet. Dabei ist die Rotorwelle 5 des Elektromotors 2 axial zur Abtriebswelle 9 des Getriebes ausgerichtet. Weiterhin ist die Rotorwelle 5 des Elektromotors 2 im Bereich der Getriebegehäuseschale 10 10 in der Abtriebswelle 9 drehbar gelagert aufgenommen.

Ein Schaltungsträger 7 oder Leiterplatte oder auch PCB ist an der der Abtriebswelle 9 abgewandten Seite der Motorgehäuseschale 6 stirnseitig angeordnet und gegen den Raum außerhalb des Gehäuses mit einer weiteren Dichtung 13 zwischen der Motorgehäuseschale 6 und einem Deckel 14 abgedichtet.

Ein Rotorlagen-Sensorsystem (RPS = Rotor Position Sensor System) ist hier axial in Fortführung der Rotorwelle 5 ausgestaltet. Der Sensormagnet ist mit der entsprechenden Stirnseite der Rotorwelle 5 verbunden und ist in der Regel ca. 5 mm hoch. Der Sensor 11 selbst ist auf der Leiterplatte angeordnet und ist in der Regel ca. 2,5 mm hoch. Der Luftspalt zwischen dem Sensormagnet und dem Sensor 11 beläuft sich in der Regel in der Größenordnung von ca. 2-3 mm. Diese Anordnung des Rotorlagen-Sensorsystems trägt zur axialen Baulänge des Aufbaukonzepts bei. Einen weiteren Beitrag zur axialen Baulänge liefert der Decke zum Abschluss und zur Abdichtung der Motorgehäuseschale 6 im Bereich des Schaltungsträgers 7.

Fig. 4 zeigt einen Schnitt durch das erfindungsgemäße Aufbaukonzept. Der wesentliche Unterschied dieses Aufbaukonzepts zum Aufbaukonzept 1 aus Fig. 3 aus dem Stand der Technik ist, wie schon bei der Diskussion der schematischen Darstellungen von Fig. 2 und Fig. 1 erläutert, wobei Fig. 1 Stand der Technik zeigt, dass der Schaltungsträger 7 in der Fig. 4 zwischen dem Elektromotor 2 und der Abtriebswelle 9 des Getriebes angeordnet ist. In Fig. 4 ist der Schaltungsträger 7 in der Motorgehäuseschale 6 im Randbereich zur Getriebegehäuseschale 10 angesiedelt, es wäre aber auch möglich, den Schaltungsträger 7 in der Getriebegehäuseschale 10 , insbesondere im Randbereich zur Motorgehäuseschale 6, unterzubringen. Die Rotorwelle 5 des Elektromotors 2 ist axial zur Abtriebswelle 9 des Getriebes angeordnet und hier im Bereich der Getriebegehäuseschale 10 in der Abtriebswelle 9 drehbar gelagert aufgenommen. Bei diesem Aufbaukonzept 1 in Fig. 4 ist dafür die Rotorwelle 5 durch eine entsprechende Ausnehmung 17 in dem Schaltungsträger 7 in die Getriebegehäuseschale 10 zur Abtriebswelle 9 geführt.

In der Getriebegehäuseschale 10 ist auch mindestens ein Zahnrad 18 des Getriebes angeordnet.

Der Schaltungsträger 7 , mit einer Steuereinheit 8 zur Steuerung des Elektromotors 2, ist beidseitig mit elektronischen Komponenten bestückt.

Dabei ist ein erster Sensor 11 zur Erfassung der Rotorlage auf der zum Elektromotor 2 hin gewandten Seite des Schaltungsträgers 7 außerhalb der Ausnehmung 17, und damit "offaxis" zur Rotorwelle 5, das heißt, außerhalb der Rotorwelle 5 angeordnet. Der erste Sensor 11 ist beispielsweise als MR-Sensor oder magnetoresistiver Sensor ausgeführt, kann aber auch als ein Switched-Hall-Sensor-Array ausgeführt sein, mit typischerweise drei Hall-Schaltelementen. Ein entsprechender Geber ist entsprechend "offaxis" drehfest mit der Rotorwelle 5 verbunden.

Ein zweiter Sensor 12 zur Winkelerfassung der Abtriebswelle 9 ist auf der zur Abtriebswelle 9 hin gewandten Seite des Schaltungsträgers 7 außerhalb der Ausnehmung 17 angeordnet. Der zweite Sensor 12 kann beispielsweise als linearer Hall-Sensor, als Single-Switched-Hall-Sensor oder als Switched-Hall-Sensor-Array ausgeführt sein. Ein korrespondierender Geber ist drehfest mit der Abtrieswelle verbunden.

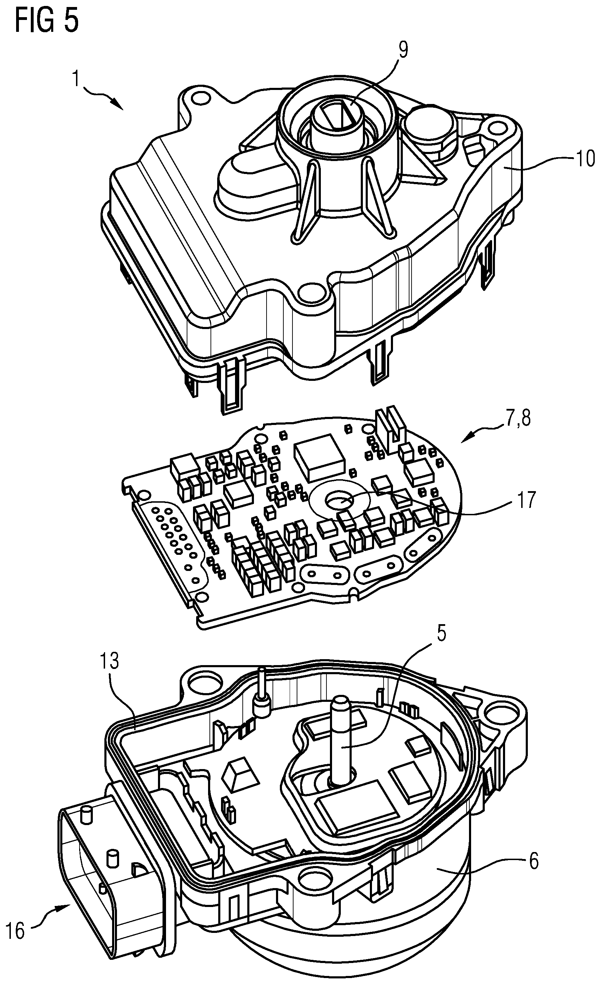

Fig. 5 zeigt eine Explosionsdarstellung des Aufbaukonzepts.

Dadurch, dass der Schaltungsträger 7 in Fig. 4 und Fig. 5 zwischen dem Elektromotor 2 und der Abtriebswelle 9 des Getriebes angeordnet ist, entspricht hier die radiale Ausdehnung der Motorgehäuseschale 6 im wesentlichen der radialen Ausdehnung des Elektromotors 2.

Dadurch, dass der erste Sensor 11 zur Erfassung der Rotorlage, nicht wie im Stand der Technik axial in Fortführung der Rotorwelle 5 an deren Stirnseite, sondern "offaxis", außerhalb der Ausnehmung 1718 in der Leiterplatte und damit außerhalb der Rotorwelle 5 angeordnet ist, und dadurch, dass der Deckel 14 weggelassen werden kann, entspricht die gesamte axiale Ausdehnung des Aufbaukonzeptes im wesentliche der Summe der axialen Ausdehnungen der Motorgehäuseschale 6 und der axialen Ausdehnung der Getriebegehäuseschale 10.

Ein weiterer wesentlicher Vorteil des erfindungsgemäßen Aufbaukonzept 1 gegenüber dem Aufbaukonzept 1 auf der Stand der Technik betrifft die geringeren Materialkosten und die Herstellungskosten, da insbesondere die zweite Dichtung 13 zwischen dem Deckel 14 und der Motorgehäuseschale 6 und auch der Deckel 14 selbst, und die damit verbundenen Herstellungsschritte eingespart werden können.

Ferner können beide Sensoren 11, 12 bei der Bestückung der Leiterplatte 7 als SMD-Komponenten im ReFlow- Verfahren assembliert werden, das heißt, zur Sensierung der drehenden Komponenten sind keine Sensordome erforderlich.

Insbesondere ist hier an der Motorgehäuseschale 6 ein Stecker 16 insbesondere zur Übertragung von Signalen angeordnet.

### Bezugszeichenliste

1 Aufbaukonzept,
2 Elektromotor,
3 Stator,
4 Rotor,
5 Rotorwelle,
6 Motorgehäuseschale,
7 Schaltungsträger,
8 Steuereinheit, elektronische Komponenten
9 Abtriebswelle eines Getriebes,
10 Getriebegehäuseschale,
11 erster Sensor,
12 zweiter Sensor,
13 Dichtung,
14 Deckel,
15 Lager,
16 Stecker,
17Ausnehmung im Schaltungsträger,
18 Zahnrad in der Getriebegehäuseschale

## Patentansprüche

1. Aufbaukonzept (1) eines Antriebs für eine Aktuierung im Antriebsstrang eines Kraftfahrzeugs, umfassend:
- Einen Elektromotor (2) mit einer Motorgehäuseschale (6),
- Einen Schaltungsträger (7) mit einer Steuereinheit (8) zur Steuerung des Elektromotors (2),
- Eine Abtriebswelle (9) eines Getriebes mit einer Getriebegehäuseschale (10), wobei der Schaltungsträger (7) zwischen dem Elektromotor (2) und der Abtriebswelle (9) des Getriebes angeordnet ist, wobei die Rotorwelle (5) durch eine Ausnehmung (17) in dem Schaltungsträger (7) führt,
wobei der Schaltungsträger (7) beidseitig mit elektronischen Komponenten bestückt ist, wobei ein erster Sensor (11) zur Erfassung der Rotorlage auf der zum Elektromotor (2) hin gewandten Seite des Schaltungsträgers (7) außerhalb der Ausnehmung (17) und ein zweiter Sensor (12) zur Winkelerfassung der Abtriebswelle (9) auf der zur Abtriebswelle (9) hin gewandten Seite des Schaltungsträgers (7) außerhalb der Ausnehmung (17) angeordnet ist, **dadurch gekennzeichnet, dass** die Rotorwelle (5) des Elektromotors (2) axial zur Abtriebswelle (9) des Getriebes angeordnet ist, und die Rotorwelle (5) des Elektromotors (2) im Bereich der Getriebegehäuseschale (10) in der Abtriebswelle (9) drehbar gelagert aufgenommen ist.

2. Aufbaukonzept (1) nach Anspruch 1, **dadurch gekennzeichnet, dass** der erste Sensor (11) als magnetoresistiver Sensor oder als Switched-Hall-Sensor-Array ausgeführt ist.,

3. Aufbaukonzept (1) nach Anspruch 1, **dadurch gekennzeichnet, dass** der zweite Sensor (12) als linearer Hall-Sensor, als Single-Switched-Hall-Sensor oder als Switched-Hall-Sensor-Array ausgeführt ist.

4. Aufbaukonzept (1) nach einem der vorhergehenden Ansprüche, **dadurch gekennzeichnet, dass** zwischen der Motorgehäuseschale (6) und der Getriebegehäuseschale (10) eine Dichtung (13) angeordnet ist.

5. Aufbaukonzept (1) nach Anspruch 4, **dadurch gekennzeichnet, dass** die Dichtung (13) als Flüssigdichtung oder als Feststoffdichtung ausgeführt ist oder an eine der beiden Gehäuseschalen angespritzt ist.

6. Aufbaukonzept (1) nach einem der vorhergehenden Ansprüche, **dadurch gekennzeichnet, dass** die radiale Ausdehnung der Motorgehäuseschale (6) im wesentlichen der radialen Ausdehnung des Elektromotors (2) entspricht.

7. Aufbaukonzept (1) nach einem der vorhergehenden Ansprüche, **dadurch gekennzeichnet, dass** die gesamte axiale Ausdehnung des Aufbaukonzeptes im wesentliche der Summe der axialen Ausdehnung der Motorgehäuseschale (6) und der axialen Ausdehnung der Getriebegehäuseschale (10) entspricht.

8. Aufbaukonzept (1) nach einem der vorhergehenden Ansprüche, **dadurch gekennzeichnet, dass** die Aktuierung als Parksperre, als Automatikgetriebe-Wahlschalter, als Gangsteller oder als Kupplungsaktuator in einem Kraftfahrzeug ausgestaltet ist.

9. Aufbaukonzept (1) nach einem der vorhergehenden Ansprüche, **dadurch gekennzeichnet, dass** die Rotorwelle (5) in der Abtriebswelle (9) drehbar gelagert ist, wobei das Lager in der Abtriebswelle (9) als Gleitlager oder Wälzkörperlager ausgeführt sein kann.

## Claims

1. Structural concept (1) of a drive for an actuation means in the drive train of a motor vehicle, comprising:
- an electric motor (2) with a motor housing shell (6),
- a circuit carrier (7) with a control unit (8) for controlling the electric motor (2),
- an output shaft (9) of a gearbox with a gearbox housing shell (10), the circuit carrier (7) being arranged between the electric motor (2) and the output shaft (9) of the gearbox, the rotor shaft (5) leading through a recess (17) in the circuit carrier (7),
the circuit carrier (7) being equipped with electronic components on both sides, a first sensor (11) for detecting the rotor position being arranged outside the cutout (17) on the side of the circuit carrier (7) facing the electric motor (2), and a second sensor (12) for detecting the angle of the output shaft (9) being arranged outside the cutout (17) on the side of the circuit carrier (7) facing the output shaft (9), **characterized in that** the rotor shaft (5) of the electric motor (2) is arranged axially with respect to the output shaft (9) of the gearbox, and the rotor shaft (5) of the electric motor (2) is accommodated in the output shaft (9) in a rotatably mounted manner in the region of the gearbox housing shell (10).

2. Structural concept (1) according to Claim 1, **characterized in that** the first sensor (11) is realized as a magnetoresistive sensor or as a switched Hall sensor array.

3. Structural concept (1) according to Claim 1, **characterized in that** the second sensor (12) is realized as a linear Hall sensor, as a single-switched Hall sensor or as a switched Hall sensor array.

4. Structural concept (1) according to one of the preceding claims, **characterized in that** a seal (13) is arranged between the motor housing shell (6) and the gearbox housing shell (10).

5. Structural concept (1) according to Claim 4, **characterized in that** the seal (13) is realized as a liquid seal or as a solid seal or is injection-moulded onto one of the two housing shells.

6. Structural concept (1) according to one of the preceding claims, **characterized in that** the radial extension of the motor housing shell (6) corresponds substantially to the radial extension of the electric motor (2).

7. Structural concept (1) according to one of the preceding claims, **characterized in that** the total axial extension of the structural concept corresponds substantially to the sum of the axial extension of the motor housing shell (6) and of the axial extension of the gearbox housing shell (10).

8. Structural concept (1) according to one of the preceding claims, **characterized in that** the actuation means is configured as a parking lock, as an automatic transmission selector switch, as a gear selector or as a clutch actuator in a motor vehicle.

9. Structural concept (1) according to one of the preceding claims, **characterized in that** the rotor shaft (5) is mounted rotatably in the output shaft (9), it being possible for the bearing in the output shaft (9) to be realized as a sliding bearing or rolling body bearing.

## Revendications

1. Concept structural (1) d'un mécanisme d'entraînement pour un actionnement dans la chaîne cinématique d'un véhicule automobile, comprenant :
- un moteur électrique (2) comprenant une enveloppe de carter de moteur (6),
- un porte-circuit (7) comprenant une unité de commande (8) destinée à commander le moteur électrique (2),
- un arbre de sortie (9) d'une boîte de vitesses, comprenant une enveloppe de carter de boîte de vitesses (10), le porte-circuit (7) étant disposé entre le moteur électrique (2) et l'arbre de sortie (9) de la boîte de vitesses, l'arbre de rotor (5) passant à travers un évidement (17) dans le porte-circuit (7),
le porte-circuit (7) étant équipé de composants électroniques sur les deux faces, un premier capteur (11) destiné à détecter la position du rotor étant disposé sur le côté du porte-circuit (7) tourné vers le moteur électrique (2) à l'extérieur de l'évidement (17) et un deuxième capteur (12) destiné à détecter l'angle de l'arbre de sortie (9) sur le côté du porte-circuit (7) tourné vers l'arbre de sortie (9) à l'extérieur de l'évidement (17), **caractérisé en ce que** l'arbre de rotor (5) du moteur électrique (2) est disposé axialement par rapport à l'arbre de sortie (9) de la boîte de vitesses et l'arbre de rotor (5) du moteur électrique (2) est monté rotatif dans la zone de l'enveloppe de carter de boîte de vitesses (10) dans l'arbre de sortie (9).

2. Concept structural (1) selon la revendication 1, **caractérisé en ce que** le premier capteur (11) est réalisé sous la forme d'un capteur magnétorésistif ou sous la forme d'un réseau de capteurs à effet Hall commuté.

3. Concept structural (1) selon la revendication 1, **caractérisée en ce que** le deuxième capteur (12) est réalisé sous la forme d'un capteur à effet Hall linéaire, d'un capteur à effet Hall commuté unique ou d'un réseau de capteurs à effet Hall commutés.

4. Concept structural (1) selon l'une des revendications précédentes, **caractérisé en ce qu'**une garniture d'étanchéité (13) est disposée entre l'enveloppe de carter de moteur (6) et l'enveloppe de carter de boîte de vitesses (10).

5. Concept structural (1) selon la revendication 4, **caractérisé en ce que** la garniture d'étanchéité (13) est réalisée sous la forme d'une garniture d'étanchéité liquide ou d'une garniture d'étanchéité solide ou est pulvérisée sur l'une des deux enveloppes de carter.

6. Concept structural (1) selon l'une des revendications précédentes, **caractérisé en ce que** l'expansion radiale de l'enveloppe de carter de moteur (6) correspond sensiblement à l'expansion radiale du moteur électrique (2).

7. Concept structural (1) selon l'une des revendications précédentes, **caractérisé en ce que** l'expansion axiale totale du concept structural correspond sensiblement à la somme de l'expansion axiale de l'enveloppe de carter de moteur (6) et de l'expansion axiale de l'enveloppe de carter de boîte de vitesses (10).

8. Concept structural (1) selon l'une des revendications précédentes , **caractérisé en ce que** l'actionnement est réalisé sous la forme d'un verrou de stationnement, d'un sélecteur de boîte de vitesses automatique, d'un sélecteur de rapport ou d'un actionneur d'embrayage dans un véhicule automobile.

9. Concept structural (1) selon l'une des revendications précédentes, **caractérisé en ce que** l'arbre de rotor (5) est monté rotatif dans l'arbre de sortie (9), le palier dans l'arbre de sortie (9) pouvant être réalisé sous la forme d'un palier lisse ou d'un palier à éléments roulants.
